# EUROPÄISCHE PATENTSCHRIFT

(11) **EP 1 992 711 B1**
(45) Veröffentlichungstag und Bekanntmachung des Hinweises auf die Patenterteilung: **06.04.2011**
(21) Anmeldenummer: 08002694.1
(22) Anmeldetag: 13.02.2008
(51) Int. Cl.: C22C 37/08, F16D 65/12

(54) **Gusseisenlegierung mit Lamellengraphit**
Cast iron allow with lamellar graphite
Alliage en fonte doté de graphite lamellaire

(30) Priorität: 13.02.2007 DE 102007006973
(43) Veröffentlichungstag der Anmeldung: 19.11.2008
(73) Patentinhaber: M.Busch GmbH & Co. KG, 59909 Bestwig (DE)
(72) Erfinder: Brunke, Jochen, Dr., 59929 Brilon (DE); Orlikowski, Phillipp, Dr., 51674 Wiehl (DE)
(74) Vertreter: Christophersen, Ulrich Rudolf

(56) Entgegenhaltungen:
- EP-A- 0 693 336
- EP-A- 1 004 789
- EP-B1- 1 646 732
- DE-A1- 3 305 184
- JP-A- 61 006 250

## Beschreibung

Die Erfindung betrifft eine Gusseisenlegierung mit Lamellengraphit, die Verwendung der Gusseisenlegierung in Bremsscheiben und eine die Legierung enthaltende Bremsscheibe.

Bei Kraftwagen, sowohl bei Personenkraftwagen als auch bei Nutzfahrzeugen sind Bremssysteme üblich, die teilbeaufschlagte Scheibenbremsen aus Grauguss aufweisen. Die Scheibenbremsen haben gegenüber den ebenfalls üblichen Trommelbremsen den Vorteil, dass sie weniger Gewicht und ein verbessertes Fading-Verhalten zeigen. Im Bereich der gegenüber Personenkraftwagen um ein vielfaches schwereren Nutzfahrzeuge, ist jedoch zu berücksichtigen, dass die Bremssysteme wegen des hohen Fahrzeuggewichts und wegen der langanhaltenden Belastungen bei Bergabfahrten ganz besonderen Belastungen unterliegen. Auch sind die Erwartungen an die Lebensdauer einer Bremse, insbesondere einer Bremsscheibe bei Nutzfahrzeugen deutlich höher als bei Personenkraftfahrzeugen, da die Standzeiten der Nutzfahrzeuge aus wirtschaftlichen Gründen gering sein müssen, was auch für die Reparaturen einschließlich des Wechsels von Bremsscheiben gilt.

Bei der Entwicklung von Scheibenbremsen für Nutzfahrzeuge, d.h. insbesondere für Lastkraftwagen und Schwerlastanhänger, nach dem Vorbild der bei Personenkraftwagen eingeführten Scheibenbremssysteme, wurde festgestellt, dass die bisherigen für Trommelbremsen eingesetzten Werkstoffe auf Basis von Gusseisen mit Lamellengraphit den Beanspruchungen nicht gewachsen sind. Es werden netzförmige Risse und Abplatzungen bei der Bremsfläche, hoher Verschleiss, Totalbrüche und überhöhte Temperaturbelastung der Bremsbacken mit der Folge nachlassender Bremswirkung beobachtet. Es wurde versucht, den Gusseisenwerkstoff mit den bekannten festigkeitssteigernden Elementen wie Chrom, Molybdän, Kupfer oder Vanadium zu legieren. Diese Legierungen waren relativ teuer und zeigten nicht die erwarteten Haltbarkeiten. So hatten diese Legierungen mit den üblichen hohen Si-Gehalten unzureichende Wärmeleitfähigkeiten, wiesen zum Teil unerwünschte Sonderkarbide im Mikrogefüge auf und ließen sich nur schlecht bearbeiten. Auch zeigten sie bei hoher Temperaturbelastung eine ungleichmäßige Härteverteilung in der Nähe der Bremsfläche und Oxidationssäume um die Graphitlamellen. Die Lebenserwartung der Bremsscheiben war insgesamt unbefriedigend.

Zur Behebung der bekannten Nachteile wurde auch vorgeschlagen, den Si-Gehalt zu erhöhen. Dadurch sollte die Oxidationsbeständigkeit verbessert und die α-γ-Umwandlungstemperatur des Eisens zur Vermeidung von Härtegefüge im Bremsflächenbereich auf mehr als 800°C heraufgesetzt werden. Die Umwandlungsvorgänge mit der Bildung von verschiedenen Kristallstrukturen, wie Martensit, Restaustenit, Perlit Ferrit u.a., konnten jedoch nicht verhindert werden. Die durch den höheren Si-Gehalt verschlechterte Wäremleitfähigkeit führte außerdem zu sehr hohen Temperaturen mit selektiver Oxidation in der Nähe der Graphitlamellen (s. z. B. D. Severin, U. Franke, DFG-Forschungsvorhaben Se 342/25, 2002 und ATZ 104; 2002, Bericht Nr. 11).

Im Europäischen Patent 0 778 355 wird eine Lamellengraugusslegierung für Scheibenbremsen offenbart, die 3,65 bis 3,95 Gew.-% Kohlenstoff, 0,20 Gew.-% bis 0,40 Gew.-% Chrom, 1,80 Gew.-% bis 2,20 Gew.-% Silizium, 0,60 Gew.-% bis 0,80 Gew.-% Mangan, 0,30 Gew.-% bis 0,50 Gew.-% Kupfer, 0,20 Gew.-% bis 0,80 Gew.-% Niob sowie Spuren anderer Gusslegierungsmetalle wie Vanadium, Nickel, Zinn, Molybdän, Antimon, die jeweils mit einem Gehatl von 0,01 bis 0,06 Gew.-% enthalten sein dürfen, wobei der Gesamtgehalt der zusätzlichen Legierungsmetalle zusammen nicht höher als etwa 0,3 Gew.-% ist, enthält und als Resteisen und mit erschmelzungsbedingten Verunreinigungen wie Phosphor oder Schwefel.

Die offenbarte Legierung enthält Niob in einer Menge bis zu 0,45 Gew.-%, wodurch der Verschleiß der Bremsscheiben erheblich verringert werden konnte. Nachteilig ist, dass die genaue Einstellung der Legierung und auch die mechanische Bearbeitung der Gussteile einen hohen Aufwand erfordert. Auch ist die Belastbarkeit im Betrieb nur begrenzt und eine Risssicherheit nicht gewährleistet.

Eine weitere Legierung aus Gusseisen mit Lamellengraphit ist aus dem Europäischen Patent 1 004 789 bekannt, welche 3,9 bis 4,2 Gew.-% Kohlenstoff, 0,7 bis 1,2 Gew.-% Silizium, ≤ 0,02 Gew.-% Phosphor, ≤ 0,03 Gew.-% Schwefel, ≤ 0,05 Gew.-% Aluminium sowie einem oder mehreren der Legierungselemente Mangan, Vanadium, Kupfer, Molybdän und Chrom mit einem Anteil von insgesamt maximal 1,6 Gew.-% und als Rest Eisen einschließlich unvermeidbarer Verunreinigungen enthält. Die in dieser Druckschrift beschriebene Graugusslegierung zeigt einen relativ geringen Siliziumgehalt, der bis an die Grenze abgesenkt wurde, an welcher die Graphitausscheidung bei der Erstarrung des Eisens gerade noch gewährleistet werden kann. Hierbei ist es jedoch zur Sicherung der graphitischen Erstarrung erforderlich, sehr reine Eisenrohstoffe einzusetzen und erschmelzungsbedingte Verunreinigungen wie Phosphor und Schwefel weitgehend zu vermeiden. Es ist daher erforderlich, das Eisen im Elektroinduktionsofen zu schmelzen, auch muss das flüssige Eisen vor oder während des Gießens mit speziellen Legierungen geimpft werden, wobei hier auch die Gefahr besteht, dass sich bei der Erstarrung des flüssigen Eisens Mikroporositäten bilden. Als Rohstoffe kommen nur spezielle aber nicht unbeschränkt verfügbare Stahlschrott-Sorten und speziell für die Sphärogusserzeugung hergestelltes Roheisen in Betracht. Dies wird überwiegend durch Vorreduktion von Ilmeniterzen (Titanomagnetit) gewonnen. Dabei fällt eine hochkonzentrierte Titandioxidschlacke und nach Entschwefelung, Oxidation und Rückkolung ein an Nebenelementen armes Roheisen (Soreleisen) an. Es enthält nur geringe Mengen an Silizium, Mangan, Phosphor, Schwefel, Chrom und sogenannten Spurenelementen. Wegen des relativ aufwendigen Herstellungsverfahrens und der Tatsache, dass die erforderlichen Titan-haltigen Rohstoffe nicht überall verfügbar sind und sehr lange Transportwege hinzukommen, ist der Preis für dieses Material hoch. Hinzu kommt, dass die Auswahl von Legierungselementen zur Festigkeitssteigerung und Gefügebeeinflussung nur begrenzt ist.

In der EP 0 693 336 A2 wird ein Verfahren zur Herstellung einer Gußeisen-Legierung für Bremsscheiben und Bremstrommeln von Fahrzeugen offenbart, in welchem in einer ersten Stufe eine phosphorarme, flüssige Gußeisenbasislegierung zur Einstellung einer Wärmeleitfähigkeit von mindestens 46 W/Km (bei Temperaturen von 0 - 100°C), eines niedrigen E-Moduls und relativ niedriger Harte (< 200 Brinell-Einheiten) zunächst mit stickstoffhaltigen Aufkohlungsmitteln auf 3,6 - 3,9 % Kohlenstoff aufgekohlt und dabei auf einen Stickstoffgehalt von 0,005 bis 0,025 % N gebracht wird, in einer zweiten Stufe zur Perlitstabilisierung des Eisens und Erhöhung der Zugfestigkeit ohne wesentliche oder schädliche Anhebung des E-Moduls mit 0,2 - 0,4% Cr, 0,2 - 0,4% Cu, 0,1 - 0,3% Ni, 0,1 - 0,2% Mo, legiert wird und in einer dritten Stufe durch die Zugabe der Stickstoff-bindenden Elemente Zirkon bis 0,1%, vorzugsweise 0,06% Niob/Tantal bis 0,1%, vorzugsweise 0,05% Titan bis 0,12%, vorzugsweise 0,07% und/oder Vanadium bis 0,2 %, vorzugsweise 0,15% im Grundgefüge des Eisens feinverteilte, extrem harte und hochschmelzende Carbonitrid-Kristalle ausgeschieden werden.

Der vorliegenden Erfindung lag die Aufgabe zugrunde, die Nachteile der aus dem Stand der Technik bekannten Legierungen zu vermeiden und die Herstellbarkeit der Bremsscheiben zu vereinfachen. Dabei sollte eine Legierung erhalten werden, die aus gut zugänglichen und relativ günstigen Rohstoffen herzustellen ist, wobei auch erschmelzungsbedingte Verunreinigungen wie Phosphor oder Schwefel toleriert werden können.

Gegenstand der vorliegenden Erfindung ist demgemäß eine Gusseisenlegierung mit Lamellengraphit, die 3,7 - 4,2 Gew.-% Kohlenstoff, 0,8 -1,5 Gew.-% Silizium, 0,1 - 0,8 Gew.% Mangan, Kupfer ≤ 0,3 Gew.-%, 0,2 - 1,0 Gew.-% Nickel, Molybdän 0,1 - 0,4 Gew.-%, Chrom bis zu 0,3 Gew.-%, Phosphor ≤ 0,08 Gew.-% und Schwefel ≤ 0,1 Gew.-% als Verunreinigungen, Rest auf 100 Gew.-% Eisen sowie ggf. weitere unvermeidbare Verunreinigungen, enthält.

Unter Gusseisenlegierungen mit Lamellengraphit wird ein Grauguss mit einem hohen Anteil an Kohlenstoff verstanden, der sich wegen des hohen Kohlenstoffsgehaltes nur noch gießtechnisch herstellen lässt. Der Graphit liegt in Form von dünnen unregelmäßig geformten Stäbchen, den Graphit-Lamellen, vor.

Es wurde festgestellt, dass mit einer hochgekohlten Gusseisenlegierung gemäß der vorliegenden Erfindung, die durch eine spezielle Kombination der weiteren Inhaltsstoffe wie Silizium und Nickel, ein Gusseisen mit gleichmäßig verteiltem Lamellengraphit in feinperlitischer Grundmasse erhalten werden kann. Die Graphitlamellen sind in ihrer Struktur und Anzahl verantwortlich für die gute Wärmeleit-fähigkeit des Graugusses, die insbesondere beim Einsatz des Materials in Bremsscheiben von Bedeutung ist. Je größer die Wärmeleitfähigkeit ist, je beständiger ist der Scheibenbremswerkstoff gegen zyklische Temperaturschwankungen, die bei jeder Bremseinleitung auftreten.

Die Legierung ist so aufgebaut, dass die Graphitlamellen bei den vorliegenden Temperaturzyklen, die durch das Bremsen aufgebaut werden, stabil bleiben und es wird verhindert, dass die Graphitlamellen von selektiven oxidischen Randschichten umgeben werden. Entstehen oxidische Ränder um die Graphitlamellen durch das Silizium wird die Wärmeleitfähigkeit stark reduziert und es kann dann im ungünstigsten Fall zu einer Hot-Spot-Bildung auf der Bremsscheibe kommen, die zum Reißen der Bremsscheibe führt. Eine gerissene Bremsscheibe kann aus Sicherheitsgründen nicht betrieben werden.

Durch die erfindungsgemäße Kombination aus relativ hohem Kohlenstoffgehalt in dem Bereich zwischen 3,7 und 4,2 Gew.-%, einem gegenüber dem Stand der Technik relativ geringen Siliziumgehalt und dem Vorhandensein von Nickel als Legierungselement kann eine ausreichend gleichmäßige Graphitierung beim Erstarren der Gussmasse erreicht werden. Gleichzeitig wird die Perlitausbildung bei der Abkühlung der Gussstücke stabilisiert und die mechanischen Eigenschaften der fertigen Bremsscheibe verbessert. Als weiterer Vorteil wird eine erhöhte Korrosionsbeständigkeit erreicht, ohne dass die Wärmeleitfähigkeit beeinflusst wird. Das Vorhandensein von Nickel hat ferner den Vorteil, dass es beim Wiederaufschmelzen des in der Gießerei anfallenden Kreislaufmaterials nicht abbrennt.

Die Ausbildung des lamellaren Graphits wird, wie bereits erwähnt, durch einen geringen Si-Gehalt begünstigt, der erfindungsgemäß zwischen 0,8 und 1,5 Gew.-%, bezogen auf das Gesamtgewicht der Legierung, liegt. Vorzugsweise liegt der Gehalt an Si zwischen 1 und 1,5 Gew.-%. Eine besonders günstige lamellare Graphitstruktur kann erreicht werden, wenn das Verhältnis von C: Si von 4,0 bis 2,5, bezogen auf das Gewicht, beträgt.

Nickel ist erfindungsgemäß in einer Menge von 0,2 bis 1,0 Gew.-% enthalten, vorzugswesise in ener Menge von 0,3 bis 0,6 Gew.-%.

Es ist von Vorteil, wenn die Gehalte an Silizium und Nickel auf einander abgestimmt sind und insgesamt in einer Menge von 1,2 bis 1,8 Gew.-%, vorzugsweise zwischen 1,2 und 1,5 Gew.-% liegen. Üblicherweise werden die Gehalte dieser Elemente an die Wanddicke der Bremsscheiben angepasst, wobei für eine dickwandige große Bremsscheibe, d. h. einer Bremsscheibe über ca. 15 mm Wanddicke, die Elemente in einer Menge vorliegen, die an der unteren Grenze des genannten Bereichs liegt, beispielsweise in einer Summe von etwa 1,3 Gew.-% (ca. 0,8 Gew.-% Silizium und ca. 0,5 Gew.-% Nickel) und bei dünnwandigen Bremsscheiben, d.h. Bremsscheiben mit bis zu ca. 15 mm Wanddicke, die Elemente in einer Menge vorliegen, die an der oberen Grenze des genannten Bereichs liegt, beispielsweise in einer Summe von insgesamt ca. 1,5 Gew.-% Silizium und Nickel (ca. 1,2 Gew.-% Silizium und ca. 0,3 Gew.-% Nickel) enthalten sein können. Die Menge dieser Inhaltsstoffe kann der Fachmann den Anforderungen entsprechend variieren.

Auch wurde festgestellt, dass der Zusatz von Nickel eine verringerte Oxidation in den hitzebeanspruchten Zonen der Bremsscheiben und eine gleichmäßigere Verteilung der Härtezonen an der Bremsflächennähe bei nur geringer Ferritbildung im Übergang zur Wanddicken-Mitte bewirkt. Nickel ist erfindungsgemäß in einer Menge von 0,2 bis 1,0 Gew.-%, vorzugsweise von 0,2 bis 0,8 Gew.-% und insbesondere in einer Menge von 0,3 bis 0,6 Gew.-% in der Legierung enthalten.

In einer weiteren bevorzugten Ausgestaltung der vorliegenden Erfindung wird bei der Legierung weitgehend auf sog. Carbidbildner, wie Sn, W, V und Nb verzichtet, welche die Sprödigkeit einer Legierung erhöhen würden. Mit der Legierung der vorliegenden Erfindugn ist angestrebt, das Dehnungsvermögen des Graugussen voll auszunutzen. Die Dehnung liegt vorzusweise zwischen 0,5 und 0,8%.

Die erfindungsgemäße Legierung erlaubt auch gewisse Gehalte an erschmelzungsbedingten Verunreinigungen wie Phosphor und Schwefel, die flüssige Schmelze muss zur Vergießung der Legierung nicht besonders behandelt werden, um den Phosphor- und Schwefelgehalt über Schmelzmetallurgie zu reduzieren. Diese Verunreinigungen können auch in Mengen über jeweils 0,04 Gew.-% enthalten sein. P-Werte bis 0,08 % und S-Gehalte bis 0,1 % werden die Legierung nicht negativ beein-flussen und damit ist kein besonderer Schrott im Einsatz erforderlich. Auch müssen keine besonderen Maßnahmen zur Reduzierung des Gehaltes an S und P getroffen werden, was für die Wirtschaftlichkeit der Legierung vorteilhaft ist.

Ein weiterer Gegenstand der vorliegenden Erfindung betrifft die Verwendung der Gusseisenlegierung in Bremsscheiben.

Noch ein weiterer Gegenstand der vorliegenden Erfindung ist eine Bremsscheibe für Nutzfahrzeuge, die eine Gusseisenlegierung mit
Kohlenstoff 3,7 - 4,2 Gew.-%, Silizium 0,8 - 1,5 Gew.-%, Mangan 0,1 - 0,8 Gew.-%, Kupfer ≤ 0,3 Gew.-%, Nickel 0,2 - 1,0 Gew.-%, Phosphor ≤ 0,08 Gew.-% und Schwefel ≤ 0,1 Gew.-% als Verunreinigungen und Rest auf 100 Gew.-% Eisen sowie ggf. weitere unvermeidbare Verunreinigungen, enthält.

## Patentansprüche

1. Gusseisenlegierung mit Lamellengraphit enthaltend
Kohlenstoff 3,7 - 4,2 Gew.-%
Silizium 0,8 - 1,5 Gew.-%
Mangan 0,1 - 0,8 Gew.-%
Kupfer ≤ 0,3 Gew.-%
Nickel 0,2 - 1,0 Gew.-%
Molybdän 0,1 - 0,4 Gew.-%
Chrom bis zu 0,3 Gew.-%
Phosphor ≤ 0,08 Gew.-% und Schwefel ≤ 0,1 Gew.-% als Verunreinigungen,
Rest auf 100 Gew.-% Eisen sowie ggf. weitere unvermeidbare Verunreinigungen.

2. Gusseisenlegierung nach Anspruch 1, **dadurch gekennzeichnet, dass** das Verhältnis von C : Si von 4,0 bis 2,5, bezogen auf das Gewicht, beträgt

3. Gusseisenlegierung nach Anspruch 1 oder 2, **dadurch gekennzeichnet, dass** Silizium und Nickel insgesamt in einer Menge von 1,2 - 1,8 Gew.-% vorliegen.

4. Gusseisenlegierung nach einem der Ansprüche 1 bis 3, **dadurch gekennzeichnet, dass** Nickel in einer Menge von 0,2 bis 0,8 Gew.-%, vorzugsweise in einer Menge von 0,3 bis 0,6 Gew.-% enthalten ist.

5. Gusseisenlegierung nach einem der Ansprüche 1 bis 4 **dadurch gekennzeichnet, dass** die Dehnung zwischen 0,5 und 0,8 % liegt.

6. Verwendung der Gusseisenlegierung nach einem der Ansprüche 1 bis 5 in Bremsscheiben.

7. Bremsscheibe für Nutzfahrzeuge enthaltend eine Gusseisenlegierung mit Lamellengraphit, die aufweist
Kohlenstoff 3,7 - 4,2 Gew.-%
Silizium 0,8 -1,5 Gew.-%
Mangan 0,1 - 0,8 Gew.-%
Kupfer ≤ 0,3 Gew.-%
Nickel 0,2-1,0 Gew.-%
Molybdän 0,1 - 0,4 Gew.-%
Chrom bis zu 0,3 Gew.-%
Phosphor ≤ 0,08 Gew.-% und Schwefel ≤ 0,1 Gew.-% als Verunreinigungen,
Rest auf 100 Gew.-% Eisen sowie ggf. weitere unvermeidbare Verunreinigungen.

## Claims

1. A cast iron alloy with lamellar graphite, containing carbon from 3.7 to 4.2 % by weight
silicon from 0.8 to 1.5 % by weight
manganese from 0.1 to 0.8 % by weight
copper ≤ 0.3 % by weight
nickel from 0.2 to 1.0 % by weight
molybdenum from 0.1 to 0.4 % by weight
chromium up to 0.3 % by weight
phosphorus ≤ 0.08 % by weight and sulphur ≤ 0.1 % by weight as impurities,
the remainder up to 100 % by weight of iron and optionally further unavoidable impurities.

2. A cast iron alloy according to claim 1, **characterized in that** the ratio of C : Si amounts to from 4.0 to 2.5, relative to the weight.

3. A cast iron alloy according to claim 1 or 2, **characterized in that** silicon and nickel are present as a whole in an amount of from 1.2 to 1.8 % by weight.

4. A cast iron alloy according to any one of claims 1 to 3, **characterized in that** nickel is contained in an amount of from 0.2 to 0.8 % by weight, preferably in an amount of from 0.3 to 0.6 % by weight.

5. A cast iron alloy according to any one of claims 1 to 4, **characterized in that** the expansion is between 0.5 and 0.8 %.

6. Use of the cast iron alloy according to any one of claims 1 to 5 in brake discs.

7. A brake disc for utility vehicles containing a cast iron alloy with lamellar graphite, which has carbon from 3.7 to 4.2 % by weight
silicon from 0.8 to 1.5 % by weight manganese from 0.1 to 0.8 % by weight,
copper ≤ 0.3 % by weight
nickel from 0.2 to 1.0 % by weight
molybdenum from 0.1 to 0.4 % by weight chromium up to 0.3 % by weight
phosphorus ≤ 0.08 % by weight and sulphur ≤ 0.1 % by weight as impurities,
the remainder up to 100 % by weight of iron and optionally further unavoidable impurities.

## Revendications

1. Fonte d'alliage de fer avec du graphite lamellaire, contenant du carbone, 3,7 à 4,2 % en poids
du silicium, 0,8 à 1,5 % en poids
du manganèse, 0,1 à 0,8 % en poids
du cuivre, ≤ 0,3 % en poids
du nickel, 0,2 à 1,0 % en poids
du molybdène, 0,1 à 0,4 % en poids
du chrome, jusqu'à 0,3 % en poids
du phosphore, ≤ 0,08 % en poids et du soufre, ≤ 0,1 % en poids comme impuretés,
le reste pour faire 100 % en poids étant du fer, ainsi que, le cas échéant, d'autres impuretés inévitables.

2. Fonte d'alliage de fer selon la revendication 1, **caractérisée en ce que** le rapport du C au Si est compris entre 4,0 et 2,5.

3. Fonte d'alliage de fer selon la revendication 1 ou 2, **caractérisée en ce que** le silicium et le nickel sont présents en tout en une quantité de 1,2 à 1,8 % en poids.

4. Fonte d'alliage de fer selon l'une quelconque des revendications 1 à 3, **caractérisée en ce que** le nickel est contenu en une quantité de 0,2 à 0,8 % en poids, de préférence en une quantité de 0,3 à 0,6 % en poids.

5. Fonte d'alliage de fer selon l'une quelconque des revendications 1 à 4, **caractérisée en ce que** la dilatation est comprise entre 0,5 et 0,8%.

6. Utilisation de la fonte d'alliage de fer selon l'une quelconque des revendications 1 à 5 dans des disques de frein.

7. Disque de frein pour des véhicules utilitaires contenant une fonte d'alliage de fer avec du graphite lamellaire, qui comprend
du carbone, 3,7 à 4,2 % en poids
du silicium, 0,8 à 1,5 % en poids
du manganèse, 0,1 à 0,8 % en poids
du cuivre, ≤ 0,3 % en poids
du nickel, 0,2 à 1,0 % en poids
du molybdène, 0,1 à 0,4 % en poids
du chrome, jusqu'à 0,3 % en poids
du phosphore, ≤ 0,08 % en poids et du soufre, ≤ 0,1 % en poids comme impuretés,
le reste pour faire 100 % en poids étant du fer, ainsi que, le cas échéant, d'autres impuretés inévitables.
